# EUROPEAN PATENT APPLICATION

(11) **EP 4 411 907 A1**
(43) Date of publication of application: **07.08.2024**
(21) Application number: 23214661.3
(22) Date of filing: 06.12.2023
(51) Int. Cl.: H01M 10/04, H01M 10/0587, H01M 50/103, H01M 50/15, H01M 50/474, H01M 50/477, H01M 50/48, H01M 50/489, H01M 50/547

(54) **POWER STORAGE DEVICE AND METHOD FOR PRODUCING THE SAME**

(30) Priority: 06.02.2023 JP 2023015998
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A power storage device (1) is provided with a parallelepiped box-like case (10) and an electrode body (50) housed in the case (10). The case (10) includes a bottomed rectangular cylindrical case body (21) having a rectangular opening (21c) and forming a second primary wall portion (12) and four side wall portions (13, 14, 15, 16), and a rectangular lid (31) forming a first primary wall portion (11), in which a lid peripheral edge portion (31f) is joined to an opening peripheral edge portion (21f) of the opening (21c) of the case body (21) over an entire circumference. The first primary wall portion (11) and the second primary wall portion (12) of the case (10) elastically compress an electrode laminated portion (50e) of the electrode body (50) in an electrode body thickness direction (FH).

## Description

### BACKGROUND

### Technical Field

The present disclosure relates to a rectangular power storage device in which an electrode body is housed in a rectangular parallelepiped box-like case and a method for producing the power storage device.

### Related Art

Among rectangular batteries in each of which an electrode body is housed in a rectangular parallelepiped box-like case, particularly, a battery mounted on a vehicle and the like for long time use is generally formed with external binding by use of an external binding member formed of a pair of end plates and a plurality of binding bands for the purpose of improving the characteristics of charge and discharge cycles and others. As a result of this, an electrode laminated portion of an electrode body housed in the case is in a state pressed in an electrode body thickness direction. Related prior arts include Patent Document 1 (see FIG. 1 and others of the Patent Document 1), for example.

### Related Art Documents

### Patent Documents

Patent Document 1: JP2020-173893A

### SUMMARY

### Technical Problems

However, binding a battery from outside with a binding member causes problems such as increase in cost, increase in a frame size, increase in weight, increase in the number of components, and others.

The present disclosure has been made in view of the above circumstances and has a purpose of providing a power storage device achieving elastic compression of an electrode laminated portion of an electrode body in an electrode body thickness direction by the power storage device itself and also has a purpose of providing a method for producing the power storage device.

### Means of Solving the Problems

(1) One aspect of the present disclosure to solve the above problem is to provide a power storage device comprising: a case; and an electrode body housed in the case, the case of a parallelepiped box-like shape including: a first primary wall portion of a rectangular shape; a second primary wall portion of a rectangular shape opposing to the first primary wall portion; and four side wall portions, each of which is of a rectangular shape, connects the first primary wall portion and the second primary wall portion, and extends in a case thickness direction, the electrode body including electrode plates and an electrode laminated portion of a parallelepiped shape in which the electrode plates are laminated in an electrode body thickness direction, and the electrode body being housed in the case in such a position that the electrode body thickness direction is in parallel to the case thickness direction, wherein the case includes: a case body of a bottomed rectangular cylindrical shape configuring the second primary wall portion and the four side wall portions and being formed with an opening of a rectangular shape configured by the four side wall portions; and a lid of a rectangular shape configuring the first primary wall portion in which a lid peripheral edge portion is joined to an entire circumference of an opening peripheral edge portion of the opening of the case body, and the first primary wall portion and the second primary wall portion of the case elastically compress the electrode laminated portion of the electrode body in the electrode body thickness direction.

The above-mentioned power storage device is configured such that the first primary wall portion and the second primary wall portion of the case elastically compress the electrode laminated portion of the electrode body in the electrode body thickness direction. In other words, this power storage device is of a self-compression type that elastically compresses the electrode laminated portion of the electrode body by the power storage device itself. Accordingly, no binding member needs to be separately prepared, or external binding by a simple binding member is enough in use of the power storage device.

Further, the above-mentioned power storage device is formed by joining the case body configuring the second primary wall portion and the four side wall portions to the lid configuring the first primary wall portion, and thus a power storage device of a self-compression type can be easily produced as mentioned below and the power storage device can be inexpensive.

Further, as the "power storage device", for example, secondary batteries such as a lithium-ion secondary battery, capacitors such as a lithium ion capacitor, and all-solid-state batteries can be exemplified.

Further, in the above-mentioned power storage device, an interposing member, which is made of metal or resin and formed of a flat plate or a corrugated plate, may be interposed between the first primary wall portion of the case and the electrode laminated portion of the electrode body or between the second primary wall portion of the case and the electrode laminated portion of the electrode body.

(2) Further, in the power storage device in the above (1), preferably, an elastic interposing member is provided to be elastically deformed in the case thickness direction to press the electrode laminated portion in the electrode body thickness direction in any one of between the first primary wall portion of the case and the electrode laminated portion of the electrode body and between the second primary wall portion of the case and the electrode laminated portion of the electrode body.

In the above-mentioned power storage device, the elastic interposing member is interposed between the first primary wall portion of the case and the electrode laminated portion of the electrode body or between the second primary wall portion of the case and the electrode laminated portion of the electrode body, and the electrode laminated portion is pressed by elastic deformation of the case and the elastic interposing member. The elasticity coefficient of the elastic interposing member is easily changed as compared to the elasticity coefficient of the case, and thus application of the elastic interposing member achieves a power storage device in which the electrode laminated portion is pressed by a more appropriate pressing force.

Herein, as material for the "elastic interposing member", for example, metal such as aluminum, stainless steel, steel, copper, titanium, rubber, and plastic may be exemplified.

(3) Further, the power storage device according to the above (2), preferably, the elastic interposing member is made of any one of aluminum and stainless steel.

In the above-mentioned power storage device, the elastic interposing member is made of aluminum or stainless steel, and thus the power storage device, in which the electrode laminated portion is pressed by an appropriate pressing force, can be achieved.

(4) Further, in the power storage device in the above (1), preferably, at least any one of the first primary wall portion and the second primary wall portion of the case is provided with an elastically deforming portion which is elastically deformed in the case thickness direction to press the electrode laminated portion of the electrode body in the electrode body thickness direction.

In the above-mentioned power storage device, at least any one of the first primary wall portion and the second primary wall portion of the case includes the above-mentioned elastically deforming portion, and thus the power storage device in which the electrode laminated portion is pressed with the further appropriate pressing force can be achieved.

Herein, as material for the "case including the elastically deforming portion", metal such as aluminum, stainless steel, steel, copper, titanium, and plastic may be exemplified.

(5) Further, in the power storage device in the above (4), preferably, the case comprising the elastically deforming portion is made of any one of aluminum and stainless steel.

In the above-mentioned power storage device, the case provided with the elastically deforming portion is made of aluminum or stainless steel, and thus the power storage device, in which the electrode laminated portion of the electrode body is pressed by the appropriate pressing force, can be achieved.

(6) Further, the power storage device in any one of the above (1) to (5), preferably, an electrode terminal is connected to the electrode body in the case and penetrates through and extends outside the case, and the electrode terminal is fixed to any one of the side wall portions of the case.

When a power storage module is formed by stacking a plurality of power storage devices in the case thickness direction, the first primary wall portion and the second primary wall portion of the adjacent power storage devices oppose to each other. Alternatively, the first primary wall portions of the adjacent power storage devices or the second primary wall portions of the adjacent power storage devices oppose to each other. Accordingly, in the power storage device in which the electrode terminal is fixed to the first primary wall portion or the second primary wall portion of the case, it is difficult to connect the electrode terminals of the adjacent power storage devices.

To address this, in the above-mentioned power storage device, the electrode terminal is not fixed to the first primary wall portion or the second primary wall portion but fixed to the side wall portion. As a result of this, when the power storage module is formed by stacking a plurality of the power storage devices in the case thickness direction, the electrode terminals of the adjacent power storage devices can be easily joined by use of a bus bar and others.

(7) Further, in the power storage device in any one of the above (1) to (6), preferably, an electrolytic solution housed in the case is provided, and a liquid inlet communicating inside and outside of the case to inject the electrolytic solution into the case is provided in any one of the side wall portions of the case.

In a power storage device in which a liquid inlet of an electrolytic solution is provided in the first primary wall portion or the second primary wall portion, when the power storage device is placed in such a position that any one of the side wall portions of the case faces upward, the liquid inlet provided in the first primary wall portion or the second primary wall portion faces a horizontal direction. Thus, liquid injection of the electrolytic solution becomes difficult.

To address this, in the above-mentioned power storage device, the liquid inlet is provided in the side wall portion of the case. Therefore, in injecting the electrolytic solution, the power storage device can achieve easy injection in such a manner that the power storage device is placed with the side wall portion provided with the liquid inlet facing upward.

(8) Another aspect of the present disclosure is to provide a method for producing a power storage device comprising: a case; and an electrode body housed in the case; the case of a parallelepiped box-like shape including: a first primary wall portion of a rectangular shape; a second primary wall portion of a rectangular shape opposing to the first primary wall portion; and four side wall portions, each of which is of a rectangular shape, connects the first primary wall portion and the second primary wall portion, and extends in a case thickness direction, the electrode body including an electrode plate and an electrode laminated portion of a parallelepiped shape in which the electrode plates is laminated in an electrode body thickness direction, and the electrode body being housed in the case in such a position that the electrode body thickness direction is in parallel to the case thickness direction, wherein the case includes: a case body of a bottomed rectangular cylindrical shape configuring the second primary wall portion and the four side wall portions and being formed with an opening of a rectangular shape configured by the four side wall portions; and a lid of a rectangular shape configuring the first primary wall portion in which a lid peripheral edge portion is joined to an entire circumference of an opening peripheral edge portion of the opening of the case body, and the first primary wall portion and the second primary wall portion of the case elastically compress the electrode laminated portion of the electrode body in the electrode body thickness direction, wherein the method includes: housing the electrode body in the case body; pressing and compressing the electrode laminated portion of the electrode body in the electrode body thickness direction by placing the lid on the electrode body housed in the case body and applying an external force to the first primary wall portion configured by the lid and to the second primary wall portion of the case body; joining the lid peripheral edge portion of the lid to the opening peripheral edge portion of the opening portion of the case body over an entire circumference in a state in which the electrode body is pressed and compressed to form the case, and releasing the external force after the joining.

In a conventional rectangular battery, a case is configured with a case body of a bottomed rectangular cylindrical shape constituting a first primary wall portion, a second primary wall portion, and three side wall portions of the case and configured with a lid constituting another side wall portion. The battery with such a configuration is difficult to be produced as a battery of a self-compression type. This is because a space between the first primary wall portion and the second primary wall portion of the case body is made narrower than a thickness of the electrode body or a sum of thicknesses of the electrode body and the interposing member in a battery provided with the above-mentioned interposing member for pressing and compressing the electrode laminated portion of the electrode body in the battery after assembling, so that the electrode body and the like is difficult to be inserted in the case body.

On the other hand, in the above-mentioned method for producing the power storage device, the electrode body is firstly housed in the case body of the bottomed rectangular cylindrical shape constituting the second primary wall portion and the four side wall portions in a step of the housing, and thus the electrode body can be easily housed in the case body. After that, by the above-mentioned processes of the pressing and compressing, the joining, and the releasing, the self-compression-type power storage device which elastically compresses the electrode laminated portion of the electrode body by the power storage device itself can be easily produced.

As a method of joining the lid to the case body in the process of "the joining", for example, joining by welding such as laser welding and joining by swaging may be adopted.

(9) Further, in the method for producing the power storage device in the above (8), preferably, the power storage device is provided with an elastic interposing member to be elastically deformed in the case thickness direction to press the electrode laminated portion in the electrode body thickness direction in any one of between the first primary wall portion of the case and the electrode laminated portion of the electrode body and between the second primary wall portion of the case and the electrode laminated portion of the electrode body, the housing is to overlap the elastic interposing member on the electrode laminated portion of the electrode body and to house the electrode body and the elastic interposing member in the case body, and the pressing and compressing is to press and compress the electrode laminated portion of the electrode body and the elastic interposing member in the electrode body thickness direction.

In the above-mentioned method for producing the power storage device, the power storage device is produced with the above-mentioned elastic interposing member, and thus the power storage device, in which the electrode laminated portion of the electrode body is pressed with a more appropriate pressing force, can be produced.

(10) Further, in the method for producing the power storage device in the above (9), preferably, the elastic interposing member is made of any one of aluminum and stainless steel.

In the above-mentioned method for producing the power storage device, the elastic interposing member made of aluminum or stainless steel is used, and thus the power storage device, in which the electrode laminated portion of the electrode body is pressed with the appropriate pressing force, can be produced.

(11) In the method for producing the power storage device in the above (8), preferably, at least any one of the first primary wall portion and the second primary wall portion of the case is provided with an elastically deforming portion which is elastically deformed in the case thickness direction to press the electrode laminated portion of the electrode body in the electrode body thickness direction, and the pressing and compressing is to elastically deform the elastically deforming portion in the case thickness direction and pressing and compressing the electrode laminated portion of the electrode body in the electrode body thickness direction.

In the above-mentioned method for producing the power storage device, at least any one of the first primary wall portion and the second primary wall portion of the case is provided with the above-mentioned elastically deforming portion, and thus the power storage device, in which the electrode laminated portion of the electrode body is pressed with the more appropriate pressing force, can be produced.

(12) In the method for producing the power storage device in the above (11), preferably, the case comprising the elastically deforming portion is made of any one of aluminum and stainless steel.

In the above-mentioned method for producing the power storage device, the case including the elastically deforming portion made of aluminum or stainless steel is used, and thus the power storage device, in which the electrode laminated portion of the electrode body is pressed with the appropriate pressing force, can be produced.

(13) In the method for producing the power storage device in any one of the above (8) to (12), preferably, the power storage device is provided with an electrode terminal being connected to the electrode body in the case and penetrating through and extending outside the case, the electrode terminal is fixed to any one of the side wall portions of the case, and the housing is to house the electrode body in the case body in which the electrode terminal has been fixed to the one of the side wall portions in advance to connect the electrode terminal and the electrode body.

In the above-mentioned method for producing the power storage device, in the process of the housing, the electrode body is housed in the case body in which the electrode terminal has been fixed to the side wall portion in advance to connect the electrode terminal and the electrode body. Accordingly, housing the electrode body in the case body and connecting the electrode terminal with the electrode body can be easily performed.

(14) In the method for producing the power storage device in any one of the above (8) to (13), preferably, the power storage device is provided with: an electrolytic solution housed in the case, a liquid inlet communicating inside and outside of the case to inject the electrolytic solution into the case is provided in any one of the side wall portions of the case, the method includes injecting the electrolytic solution in the case through the liquid inlet after the releasing, and the injecting is performed in a state in which the side wall portion provided with the liquid inlet faces upward.

In the above-mentioned method for producing the power storage device, the liquid inlet is provided in the side wall portion of the case. Accordingly, injection in the process of the injecting can be easily performed in such a manner that the power storage device is placed with the side wall portion provided with the liquid inlet facing upward in injecting the electrolytic solution.

### BRIEF DESCRIPTION OF THE DRAWINGS

FIG. 1 is a perspective view of a battery in a first embodiment;
FIG. 2 is an exploded perspective view of the battery in the first embodiment;
FIG. 3 is a cross-sectional view of the battery along a case width direction and a case thickness direction, taken along a line A-A in FIG. 1 in the first embodiment;
FIG. 4 is a perspective view of an electrode body in the first embodiment;
FIG. 5 is a flowchart showing a method of producing the battery in the first embodiment;
FIG. 6 is an explanatory view illustrating a state in which the electrode body and an elastic interposing member are housed in a case body in a housing step in explaining the method of producing the battery in the first embodiment;
FIG. 7 is an explanatory view illustrating a state in which an electrode laminated portion of the electrode body is pressed in an electrode body thickness direction by applying an external force in a pressing and compressing step in explaining the method of producing the battery in the first embodiment;
FIG. 8 is an explanatory view illustrating a state in which a lid peripheral edge portion of a lid is laser welded to an opening peripheral edge portion of the case body in a joining step in explaining the method of producing the battery in the first embodiment;
FIG. 9 is a cross-sectional view corresponding to FIG. 3 along a case width direction and a case thickness direction of a battery in a second embodiment;
FIG. 10 is a cross-sectional view corresponding to FIG. 3 along a case width direction and a case thickness direction of a battery in a third embodiment; and
FIG. 11 is a cross-sectional view corresponding to FIG. 3 along a case width direction and a case thickness direction of a battery in a fourth embodiment.

### DETAILED DESCRIPTION OF THE EXEMPLARY EMBODIMENTS

### First Embodiment

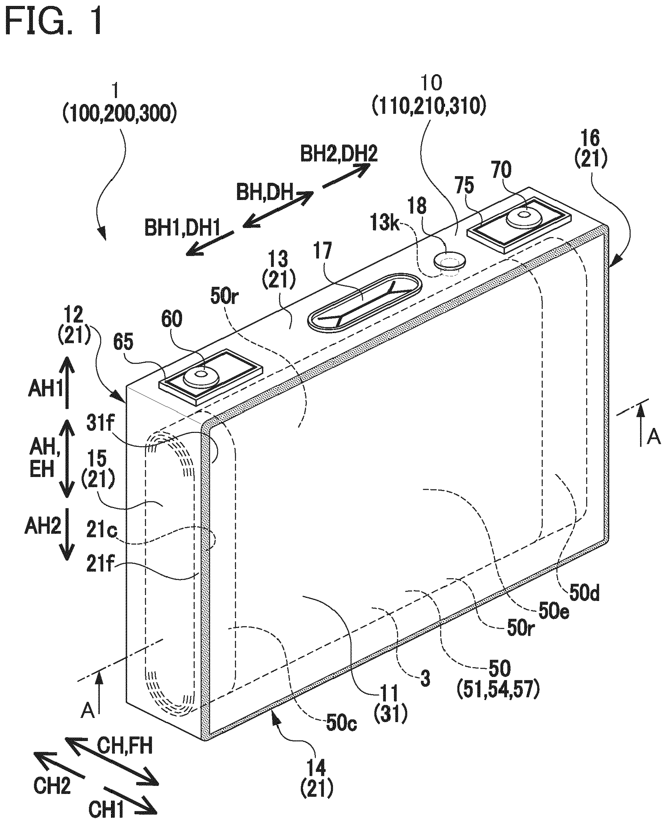

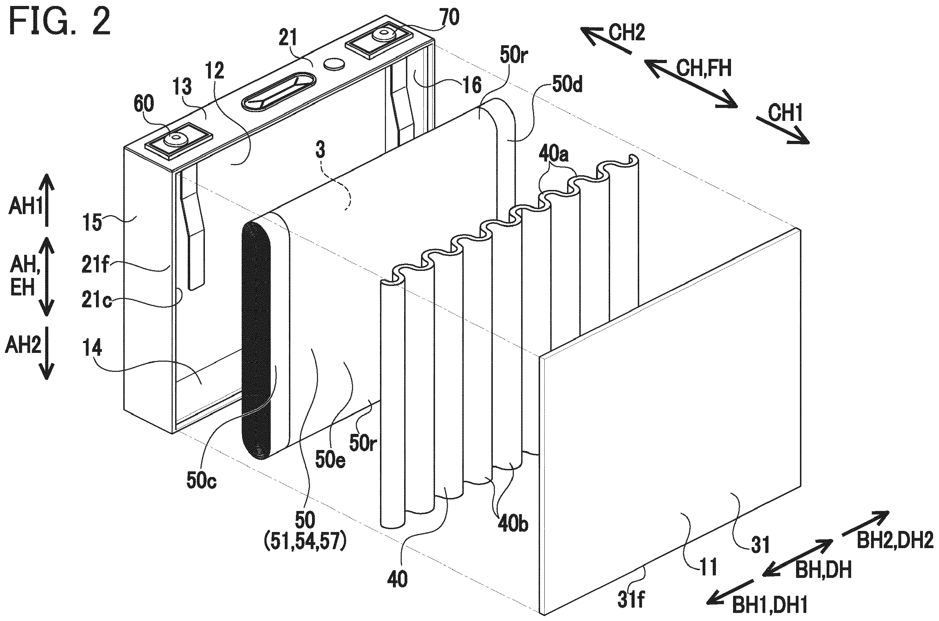

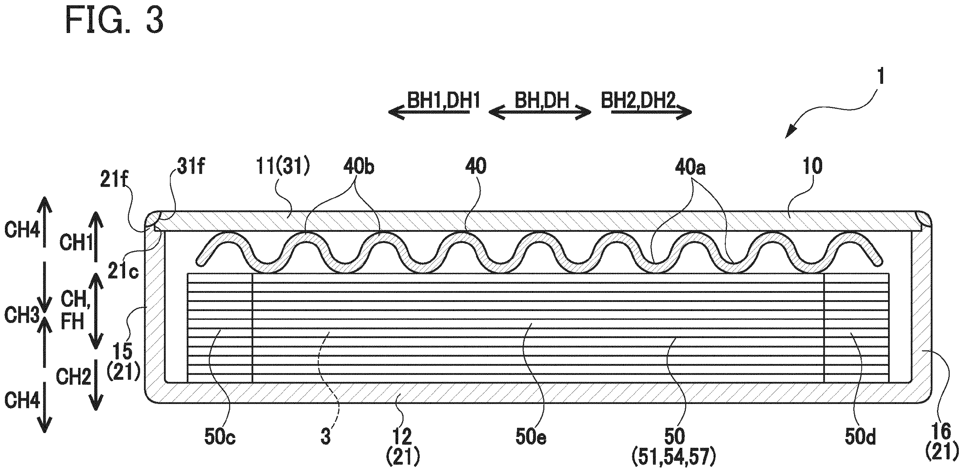

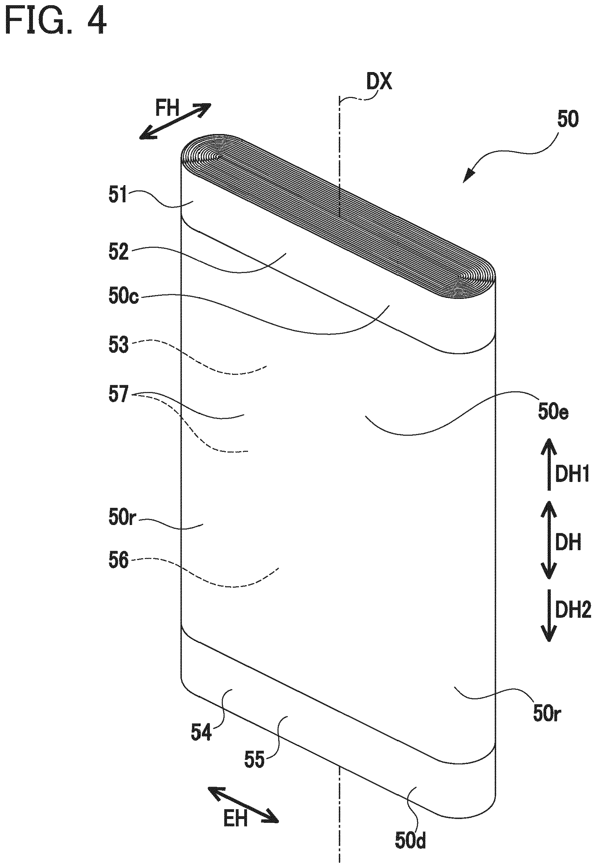

A first embodiment of the present disclosure is explained in detail below with reference to the accompanying drawings. FIG. 1 is a perspective view of a battery (a power storage device) 1 in the first embodiment. FIG. 2 is an exploded perspective view of the battery 1. FIG. 3 is a cross-sectional view of the battery 1. Further, FIG. 4 is a perspective view of an electrode body 50. In the following explanation, a case height direction AH, a case width direction BH, and a case thickness direction CH are defined as directions indicated in FIGs. 1 to 3. An electrode body axial direction DH, an electrode body width direction EH, and an electrode body thickness direction FH are defined as directions indicated in FIGs. 1 to 4. The battery 1 is a rectangular, more specifically, rectangular parallelepiped sealed lithium-ion secondary battery which will be installed in vehicles such as a hybrid car, a plug-in hybrid car, and an electric automobile.

The battery 1 is configured with a case 10, a flat wound electrode body 50 housed in the case 10, a positive terminal (an electrode terminal) 60 and a negative terminal (another electrode terminal) 70 each supported by the case 10, and others. The electrode body 50 is covered with a not-shown bag-shaped insulating holder formed of an insulating film in the case 10. Further, the case 10 contains an elastic interposing member 40 overlapped with the electrode body 50 (see FIGs. 2 and 3 but not shown in in FIG. 1). The case 10 furthermore contains an electrolytic solution 3, a part of which is impregnated in the electrode body 50 and the remainder of which is accumulated on a second side wall portion 14 as a lower wall portion of the case 10.

Among these components, the case 10 is made of metal (e.g., aluminum in the first embodiment). Alternatively, the case 10 may be formed of stainless steel. This case 10 has a parallelepiped box-like shape and includes a first primary wall portion 11, a second primary wall portion 12, and four side wall portions 13 to 16 (specifically, a first side wall portion 13, a second side wall portion 14, a third side wall portion 15, and a fourth side wall portion 16), each of which is of a rectangular plate-like shape.

The first primary wall portion 11 and the second primary wall portion 12 have wider area than the side wall portions 13 to 16. The first primary wall portion 11 and the second primary wall portion 12 oppose to each other. The first primary wall portion 11 is positioned on one side CH1 (specifically, a right forward side in FIGs. 1 and 2 and an upper side in FIG. 3) of the case thickness direction CH, and the second primary wall portion 12 is positioned on another side CH2 (specifically, a left rear side in FIGs. 1 and 2 and a lower side in FIG. 3) of the case thickness direction CH.

On the other hand, the side wall portions 13 to 16 each join the first primary wall portion 11 and the second primary wall portion 12 and extend in the case thickness direction CH. The first side wall portion 13 and the second side wall portion 14 oppose to each other in a manner that the first side wall portion 13 is positioned on an upper side AH1 in the case height direction AH and the second side wall portion 14 is positioned on a lower side AH2 in the case height direction AH. Further, the third side wall portion 15 and the fourth side wall portion 16 oppose to each other in a manner that the third side wall portion 15 is positioned on one side BH1 in the case width direction BH, and that the fourth side wall portion 16 is positioned on another side BH2 in the case width direction BH.

A safety valve 17 is provided in the first side wall portion 13 as an upper wall portion of the case 10 and will break and open when an internal pressure of the case 10 exceeds a valve opening pressure. Further, a liquid inlet 13k for communication between inside and outside of the case 10 is provided in the first side wall portion 13 and is hermetically sealed by a disc-shaped sealing member 18 made of aluminum. Herein, the liquid inlet 13k is used for injecting the electrolytic solution 3 in the case 10 in a process of producing the battery 1 as explained below.

Further, in the first side wall portion 13, the positive terminal 60 is fixed to a vicinity of an end portion on the one side BH1 in the case width direction BH. Specifically, the positive terminal 60 is formed by swaging and connecting a plurality of aluminum-made metal components and fixed to the first side wall portion 13 in a state insulated from the first side wall portion 13 via a resin portion 65 formed of a plurality of resin members. This positive terminal 60 is connected and conducted with a positive current collecting portion 50c of the electrode body 50 in the case 10, and also penetrates through the first side wall portion 13 to extend outside the case 10.

Further, in the first side wall portion 13, a negative terminal 70 is fixed to a vicinity of an end portion on the another side BH2 in the case width direction BH. Specifically, the negative terminal 70 is formed by swaging and connecting a plurality of copper-made metal components and fixed to the first side wall portion 13 in a state insulated from the first side wall portion 13 via a resin portion 75 formed of a plurality of resin members. The negative terminal 70 is connected and conducted with a negative current collecting portion 50d of the electrode body 50 in the case 10, and also penetrates through the first side wall portion 13 to extend outside the case 10.

The case 10 is configured with a case body 21 of a bottomed rectangular cylindrical shape having a rectangular opening 21c and a lid 31 of a rectangular plate-like shape. The case body 21 constitutes the second primary wall portion 12 and the four side wall portions 13 to 16, and the opening 21c of the case body 21 is formed by the four side wall portions 13 to 16. On the other hand, the lid 31 constitutes the first primary wall portion 11 to close the opening 21c of the case body 21. Specifically, a lid peripheral edge portion 31f of the lid 31 is joined or welded to an opening peripheral edge portion 21f of the opening 21c of the case body 21 over an entire circumference.

Next, the electrode body 50 is explained (see FIGs. 1 to 4). This electrode body 50 is formed in such a manner that a strip-shaped positive electrode plate (one example of an electrode plate) 51 and a strip-shaped negative electrode plate (another example of the electrode plate) 54 are overlapped via a pair of strip-shaped separators 57 formed of resin-made porous films, and the thus overlapped electrode plates 51,54 and the separators 57 are wound around a winding axis DX into a cylindrical shape and then pressed into a flat shape. To be more specific, the electrode body 50 includes a pair of electrode round portions 50r positioned on both end portions in the electrode body width direction EH and an electrode laminated portion 50e held between the pair of the electrode round portions 50r. Each of the electrode round portions 50r is a portion in which the positive electrode plate 51, the negative electrode plate 54, and the separators 57 are bent into a semi-cylindrical shape and overlapped. On the other hand, the electrode laminated portion 50e is a parallelepiped portion in which the positive electrode plate 51, the negative electrode plate 54, and the separators 57 are laminated in a flat-plate like shape in the electrode body thickness direction FH. Further, the electrode body 50 has a positive current collecting portion 50c explained later on an end portion on one side DH1 in the electrode body axial direction DH along the winding axis DX and a negative current collecting portion 50d explained later on an end portion on another side DH2 in the electrode body axial direction DH.

This electrode body 50 is housed in the case 10 in such a position that the electrode body axial direction DH is in parallel to the case width direction BH, the electrode body width direction EH is in parallel to the case height direction AH, and the electrode body thickness direction FH is in parallel to the case thickness direction CH. Further, the electrode body 50 is housed in the case 10 while the electrode laminated portion 50e is compressed in the electrode body thickness direction FH (i.e., in the case thickness direction CH). Namely, the battery 1 is a battery of a self-compression type in which the case 10 is elastically deformed to elastically compress the electrode laminated portion 50e of the electrode body 50 in the electrode body thickness direction FH by the first primary wall portion 11 and the second primary wall portion 12 of the case 10.

The positive electrode plate 51 includes a positive current collecting foil 52 formed of a strip-shaped aluminum foil. Both primary surfaces of the positive current collecting foil 52 are each formed with a positive active material layer 53 of a strip shape including positive active material particles that can occlude and discharge lithium ions. In the positive electrode plate 51, one end portion in the width direction has no positive active material layer 53 on the positive current collecting foil 52, and the positive current collecting foil 52 is exposed. This exposed portion of the positive current collecting foil 52 spirally protrudes to the one side DH1 in the electrode body axial direction DH from the electrode laminated portion 50e in the electrode body 50 to form the above-mentioned positive current collecting portion 50c. The positive current collecting portion 50c is connected to the positive terminal 60.

The negative electrode plate 54 includes a negative current collecting foil 55 formed of a strip-shaped copper foil. Both primary surfaces of the negative current collecting foil 55 are each formed with a negative active material layer 56 of a strip shape including negative active material particles that can occlude and discharge lithium ions. In the negative electrode plate 54, one end portion in the width direction has no negative active material layer 56 on the negative current collecting foil 55, and the negative current collecting foil 55 is exposed. This exposed portion of the negative current collecting foil 55 spirally protrudes to the another side DH2 in the electrode body axial direction DH from the electrode laminated portion 50e in the electrode body 50 to form the above-mentioned negative current collecting portion 50d. The negative current collecting portion 50d is connected to the negative terminal 70.

Next, the elastic interposing member 40 is explained (see FIGs. 2 and 3). The elastic interposing member 40 is interposed between the first primary wall portion 11 of the case 10 and the electrode laminated portion 50e of the electrode body 50. This elastic interposing member 40 is made of metal, specifically, aluminum in the first embodiment. The elastic interposing member 40 may be alternatively made of stainless steel. The elastic interposing member 40 is a corrugated plate having a rectangular shape in planar view. To be more specific, the elastic interposing member 40 has a configuration in which a plurality of inner semi-cylindrical portions 40a of semi-cylindrical shapes and a plurality of outer semi-cylindrical portions 40b of semi-cylindrical shapes are alternately arranged and connected in the case width direction BH. Each of the inner semi-cylindrical portions 40a protrudes toward an inner side CH3 in the case thickness direction CH, namely, toward the electrode laminated portion 50e, and extends to the case height direction AH. On the other hand, each of the outer semi-cylindrical portions 40b protrudes toward an outer side CH4 in the case thickness direction CH, namely, toward the first primary wall portion 11, and extends to the case height direction AH. This elastic interposing member 40 is elastically deformed in the case thickness direction CH to press the electrode laminated portion 50e of the electrode body 50 in the electrode body thickness direction FH.

In the battery 1 in the first embodiment, as mentioned above, the electrode laminated portion 50e of the electrode body 50 is elastically compressed in the electrode body thickness direction FH by the first primary wall portion 11 and the second primary wall portion 12 of the case 10. In other words, this battery 1 is a self-compression type in which the battery 1 itself elastically compresses the electrode laminated portion 50e of the electrode body 50. Accordingly, in use of the battery 1, a binding member does not have to be separately prepared, or outer binding by a simple binding member is enough.

Further, the battery 1 is formed by joining the case body 21 constituting the second primary wall portion 12 and the four side wall portions 13 to 16 with the lid 31 constituting the first primary wall portion 11, and thus the battery 1 of the self-compression type can be easily produced and the battery 1 can be inexpensive as explained below.

Further, in the first embodiment, the elastic interposing member 40 is interposed between the first primary wall portion 11 of the case 10 and the electrode laminated portion 50e of the electrode body 50 so that the electrode laminated portion 50e is pressed by elastic deformation of the case 10 and the elastic interposing member 40. The elastic interposing member 40 is a corrugated plate and can easily change its elasticity coefficient by changing a plate thickness or changing pitches. Accordingly, providing the elastic interposing member 40 can achieve the battery 1 in which the electrode laminated portion 50e is pressed by a more appropriate pressing force. Further, the elastic interposing member 40 is made of aluminum, and thus the battery 1 can be a battery in which the electrode laminated portion 50e is pressed by the appropriate pressing force.

Further in the first embodiment, the positive terminal 60 and the negative terminal 70 are fixed not to the first primary wall portion 11 or the second primary wall portion 12 of the case 10 but to the first side wall portion 13. Accordingly, when a battery module is to be formed by stacking a plurality of the batteries 1 in the case thickness direction CH, the positive terminal 60 and the negative terminal 70 of the adjacent batteries 1 can be easily connected by use of a bus bar or the like.

Further in the first embodiment, the liquid inlet 13k is provided in the first side wall portion 13 of the case 10. Accordingly, as mentioned below, injection can be easily performed when the battery 1 is placed in such a position that the first side wall portion 13 faces the upper side AH1 and the second side wall portion 14 faces the lower side AH2 in performing injection of the electrolytic solution 3.

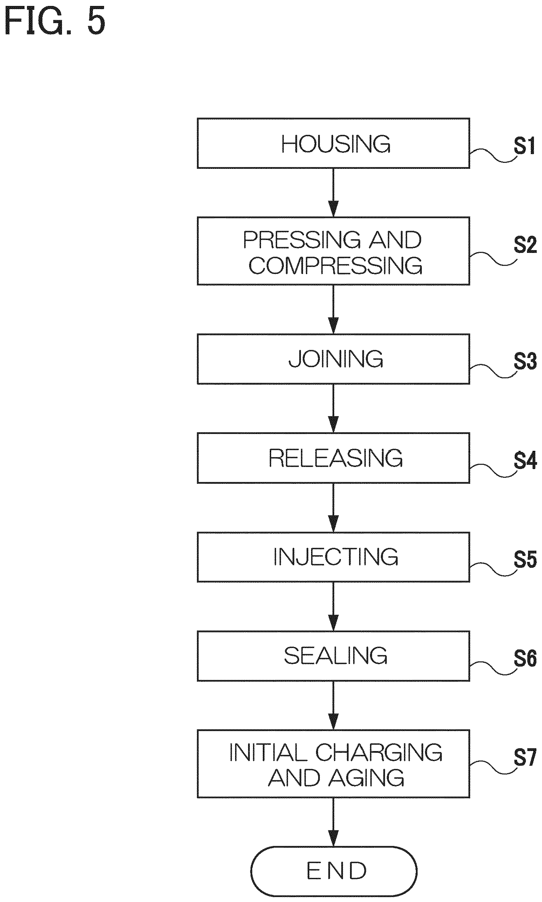

Next, a method for producing the above-mentioned battery 1 is explained (see FIGs. 5 to 8). The case body 21, in which the positive terminal 60 and the negative terminal 70 have been fixed, and the lid 31 are prepared in advance. Further, the positive electrode plate 51, the negative electrode plate 54, and a pair of the separators 57, each of which is of a strip shape, are wound cylindrically around the winding axis DX and pressed into a flat shape to form the electrode body 50. This electrode body 50 is then wrapped by a bag-shaped insulating holder (not shown).

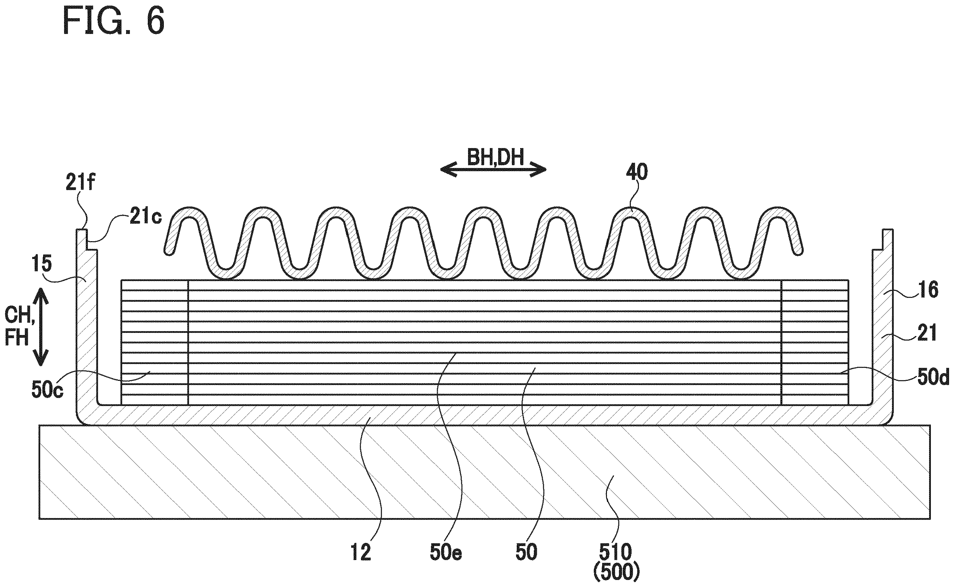

In a "housing step S1" (see FIG. 5), the electrode body 50 wrapped with the insulating holder and the elastic interposing member 40 are housed in the case body 21, in which the positive terminal 60 and the negative terminal 70 have been fixed to the first side wall portion 13 in advance, in a manner that the elastic interposing member 40 is overlapped on the electrode body 50 (see FIG. 6). To be specific, the case body 21 is placed on a flat setting table 510 of a press device 500 in such a position that the entire second primary wall portion 12 of the case body 21 comes to contact with the setting table 510. Thereafter, the electrode body 50 is housed in the case body 21 in such a position that the electrode body axial direction DH is in parallel to the case width direction BH, the electrode body width direction EH is in parallel to the case height direction AH, and the electrode body thickness direction FH is in parallel to the case thickness direction CH. Further, the elastic interposing member 40 is overlapped on the electrode laminated portion 50e of the electrode body 50. Thereafter, the positive current collecting portion 50c of the electrode body 50 and the positive terminal 60 fixed to the case body 21 are connected by laser welding. Further, the negative current collecting portion 50d of the electrode body 50 and the negative terminal 70 fixed to the case body 21 are connected by laser welding.

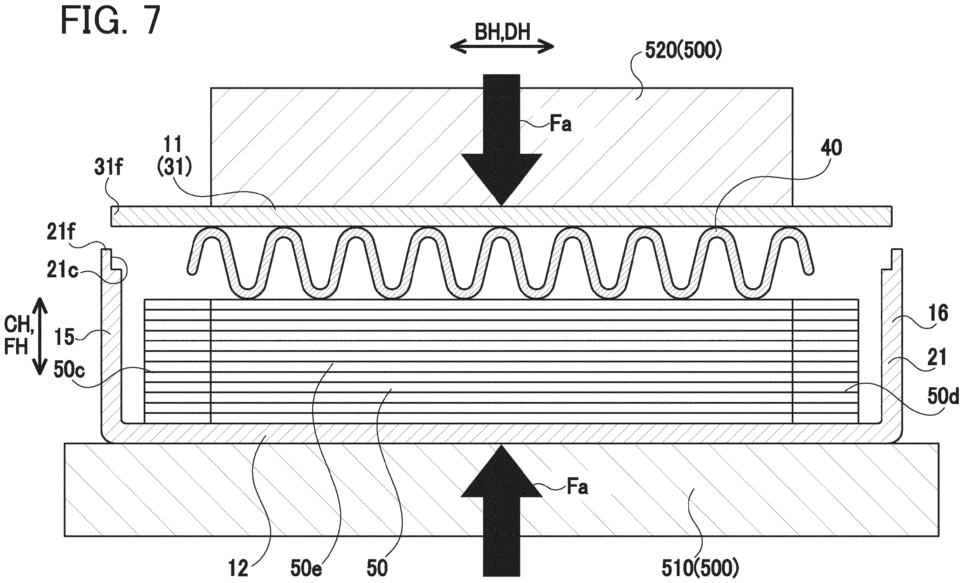

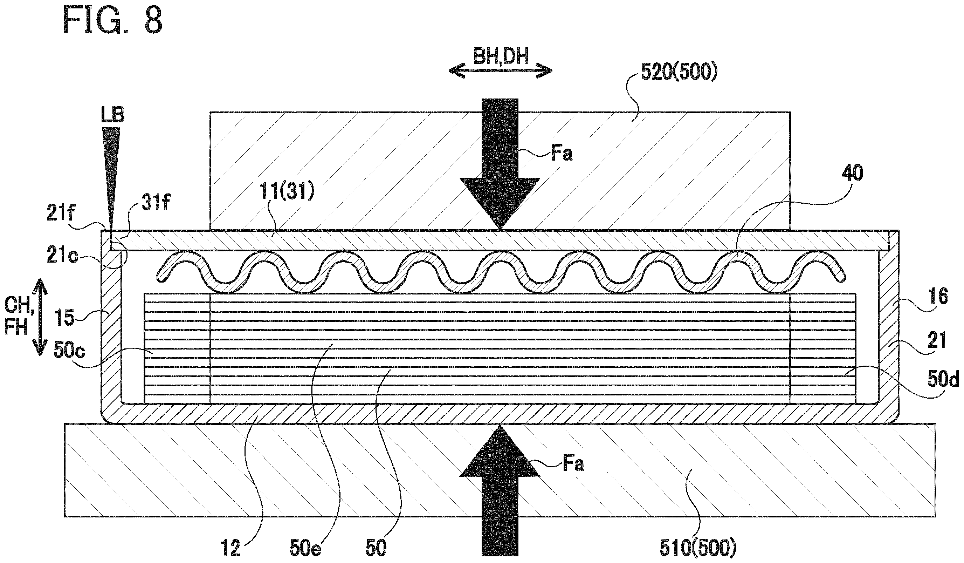

Next, in a "pressing and compressing step S2" (see FIG. 5), the lid 31 is placed over the electrode body 50 and the elastic interposing member 40 which are housed in the case body 21. An external force Fa is applied to the first primary wall portion 11 constituted by the lid 31 and to the second primary wall portion 12 of the case body 21 to press and compress the electrode laminated portion 50e of the electrode body 50 and the elastic interposing member 40 in the electrode body thickness direction FH (see FIG. 7). Specifically, a press part 520 of the press device 500 is brought into contact with the first primary wall portion 11 constituted by the lid 31 to apply the external force Fa to the first primary wall portion 11 and the second primary wall portion 12 by holding the lid 31 and the case body 21 between the press part 520 and the setting table 510. Then, the electrode laminated portion 50e of the electrode body 50 and the elastic interposing member 40 are each pressed and compressed in the electrode body thickness direction FH so that the lid peripheral edge portion 31f of the lid 31 is entirely brought into contact with the opening peripheral edge portion 21f of the opening 21c of the case body 21 (see FIG. 8).

Next, in a "joining step S3" (see FIG. 5), while the electrode body 50 and the elastic interposing member 40 are pressed and compressed by the press device 500, the lid peripheral edge portion 31f of the lid 31 is joined to the opening peripheral edge portion 21f of the case body 21 over the entire circumference to form the case 10 (see FIG. 8). In the first embodiment, the laser beam LB is irradiated on the lid peripheral edge portion 31f and the opening peripheral edge portion 21f for laser welding, and thus the lid peripheral edge portion 31f and the opening peripheral edge portion 21f are entirely joined.

Next, in a "releasing step S4" (see FIG. 5), the above-mentioned external force Fa is released. Namely, the press part 520 of the press device 500 is moved away from the lid 31 to release the external force Fa. At that time, the case 10 has already been formed in the joining step S3, and thus the compressed electrode laminated portion 50e and the elastic interposing member 40 do not return to their original state (i.e., original thickness). After releasing the external force Fa, the electrode laminated portion 50e is in an elastically compressed state by the first primary wall portion 11 and the second primary wall portion 12 of the case 10.

Next, in the "injecting step S5", the electrolytic solution 3 is injected into the case 10 through the liquid inlet 13k so that the electrolytic solution 3 is impregnated in the electrode body 50. Specifically, the battery 1 is placed in such a position that the first side wall portion 13 provided with the liquid inlet 13k is on the upper side AH1 and the second side wall portion 14 is on the lower side AH2 (see FIG. 1). Then, an injection nozzle of an injection device (not shown) is inserted in the liquid inlet 13k of the battery 1 from the upper side AH1 to inject the electrolytic solution 3 of a predetermined amount into the case 10. Thereafter, the electrolytic solution 3 is impregnated in the electrode body 50 for a predetermined period of time.

Next, in the "sealing step S6", the liquid inlet 13k is covered by the sealing member 18 from outside and the sealing member 18 is laser-welded to the case 10 to hermetically seal the sealing member 18 with the case 10.

Next, in the "initial charging and aging step S7", a charging device (not shown) is connected to the battery 1 to perform initial charging to the battery 1. Thereafter, the initially charged battery 1 is left stand for a predetermined time for aging. Thus, the battery 1 is completed.

Herein, in a conventional rectangular battery, a case 10 is configured by a bottomed rectangular cylindrical case body constituting a first primary wall portion 11, a second primary wall portion 12, and three side wall portions (specifically, a second side wall portion 14, a third side wall portion 15, and a fourth side wall portion 16) and a lid constituting a first side wall portion 13. By the battery having such a configuration, however, it is difficult to produce a battery of a self-compression type. A space between the first primary wall portion 11 and the second primary wall portion 12 of the case body is made to be narrower than a total thickness of the electrode body 50 and the elastic interposing member 40 in order to press and compress the electrode laminated portion 50e of the electrode body 50 in a post-assembled battery. Accordingly, the electrode body 50 and the elastic interposing member 40 are difficult to be inserted in the case body.

On the contrary, in the above-mentioned method for producing the battery 1, the electrode body 50 and the elastic interposing member 40 are housed in the bottomed rectangular cylindrical case body 21 constituting the second primary wall portion 12 and the four side wall portions 13 to 16 in the housing step S1 (see FIG. 6), so that the electrode body 50 and the elastic interposing member 40 can be easily housed in the case body 21. Thereafter, by performing the pressing and compressing step S2, the joining step S3, and the releasing step S4, the battery 1 of the self-compression type, in which the battery 1 itself elastically compresses the electrode laminated portion 50e of the electrode body 50, can be easily produced.

Further, in the first embodiment, the elastic interposing member 40 is used for producing the battery 1, and thus the battery 1 can be produced in such a manner that the electrode laminated portion 50e of the electrode body 50 is pressed with a further appropriate pressing force. Further, the elastic interposing member 40 made of aluminum is used, and thus the battery 1 can be produced in such a manner that the electrode laminated portion 50e is pressed with the appropriate pressing force.

Further, in the first embodiment, in the housing step S1, the electrode body 50 is housed in the case body 21 in which the positive terminal 60 and the negative terminal 70 have been fixed to the first side wall portion 13 in advance, and then the positive terminal 60 and the negative terminal 70 are connected to the electrode body 50. Accordingly, housing of the electrode body 50 in the case body 21 and connection of the electrode body 50 with the positive terminal 60 and the negative terminal 70 can be performed easily.

Further, in the first embodiment, the liquid inlet 13k is provided in the first side wall portion 13, and therefore, injection of the electrolytic solution 3 can be performed easily in a manner that the battery 1 is positioned with the first side wall portion 13 facing the upper side AH1 and the second side wall portion 14 facing the lower side AH2.

### Second Embodiment

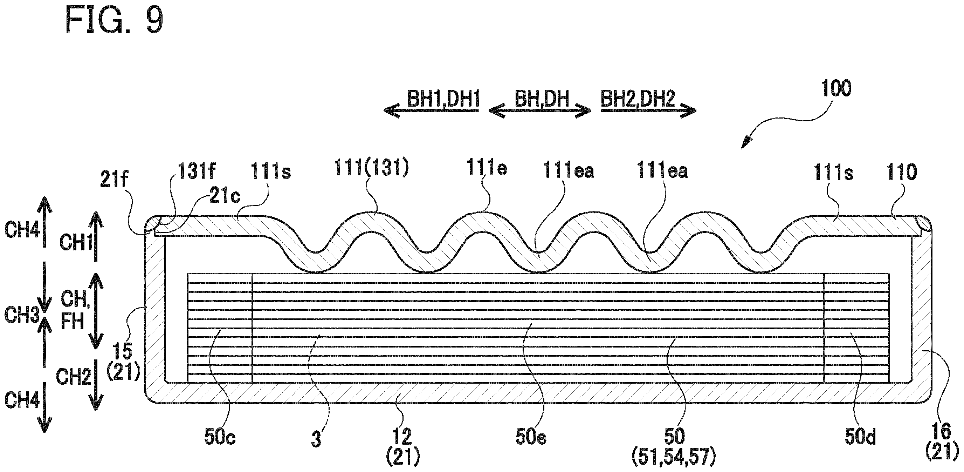

Next, a second embodiment is explained (see FIG. 9). Explanation for a similar part with the first embodiment is omitted or simplified. In the battery 1 of the first embodiment, the elastic interposing member 40 is placed between the first primary wall portion 11 of the case 10 and the electrode laminated portion 50e of the electrode body 50. On the other hand, in a battery (a power storage device) 100 of the second embodiment, there is no elastic interposing member placed between a first primary wall portion 111 of a case 110 and the electrode laminated portion 50e of the electrode body 50 and between a second primary wall portion 12 of the case 110 and the electrode laminated portion 50e of the electrode body 50. While the first primary wall portion 11 (i.e., the lid 31) of the case 10 is of a plate-like shape, the first primary wall portion 111 (i.e., a lid 131) of the case 110 in the second embodiment is not of a plate-like shape but includes an elastically deforming portion 111e, which is different from the first embodiment.

Specifically, the first primary wall portion 111 in the second embodiment has the elastically deforming portion 111e that is to be elastically deformed in the case thickness direction CH as a center portion of a rectangular shape in planar view (i.e., a rectangular shape when seen from the case thickness direction CH) other than a peripheral portion 111s. This elastically deforming portion 111e protrudes toward the inner side CH3 of the case thickness direction CH more inward than the peripheral portion 111s of the first primary wall portion 111, namely toward the electrode laminated portion 50e. The elastically deforming portion 111e includes a plurality of semi-cylindrical portions 111ea of semi-cylindrical shapes extending in the case height direction AH (namely, a direction orthogonal to a sheet surface in FIG. 9) and linking to one another in the case width direction BH. The elastically deforming portion 111e is to be elastically deformed to press the electrode laminated portion 50e of the electrode body 50 in the electrode body thickness direction FH.

The battery 100 of the second embodiment is formed by housing the electrode body 50 in the case 110 in such a manner that the electrode laminated portion 50e of the electrode body 50 is compressed in the electrode body thickness direction FH. Specifically, in the case 110, the elastically deforming portion 11 1e of the first primary wall portion 111 is mainly elastically deformed to elastically compress the electrode laminated portion 50e of the electrode body 50 in the electrode body thickness direction FH by the first primary wall portion 111 and the second primary wall portion 12 of the case 110.

Accordingly, the battery 100 of the second embodiment is also a self-compression type of elastically compressing the electrode laminated portion 50e of the electrode body 50 by the battery 100 itself. Therefore, in use of the battery 100, any binding members do not need to be separately prepared, or outside binding by a simple binding member is enough. Further, the case 110 is formed by joining the case body 21 constituting the second primary wall portion 12 and the four side wall portions 13 to 16 with the lid 131 constituting the first primary wall portion 111, and therefore, the battery 100 of the self-compression type can be easily produced and the battery 100 can be inexpensive.

Further, in the second embodiment, the first primary wall portion 111 of the case 110 includes the elastically deforming portion 111e which is elastically deformed in the case thickness direction CH, and thus the battery 100 can achieve pressing of the electrode laminated portion 50e of the electrode body 50 by a further appropriate pressing force. Furthermore, the case 110 having the elastically deforming portions 11 1e is made of aluminum, and thus the battery 100 can achieve pressing of the electrode laminated portion 50e by the appropriate pressing force.

Next, a method for producing the battery 100 of the second embodiment is explained. Firstly, in the housing step S1, the electrode body 50 wrapped with the insulating holder is housed in the case body 21 in which the positive terminal 60 and the negative terminal 70 are fixed. In the second embodiment, no elastic interposing members are provided. Thereafter, as similar to the first embodiment, the positive current collecting portion 50c and the negative current collecting portion 50d of the electrode body 50 are laser welded to the positive terminal 60 and the negative terminal 70 which are fixed to the case body 21, respectively.

Next, in the pressing and compressing step S2, the lid 131 is placed over the electrode body 50 housed in the case body 21. The external force Fa is applied to the first primary wall portion 111 constituted by the lid 131 and the second primary wall portion 12 of the case body 21 to elastically deform the elastically deforming portion 111e of the first primary wall portion 111 in the case thickness direction CH and to press and compress the electrode laminated portion 50e of the electrode body 50 in the electrode body thickness direction FH. Then, the lid peripheral edge portion 131f of the lid 131 is brought into contact with the opening peripheral edge portion 21f of the case body 21 over an entire circumference. This step is performed by the press device 500 (see FIG. 7) similar to the first embodiment.

Next, in the joining step S3, as similar to the first embodiment, the lid peripheral edge portion 131f of the lid 131 is entirely laser welded to the opening peripheral edge portion 21f of the case body 21 to form the case 10. Thereafter, as similar to the first embodiment, the releasing step S4, the injecting step S5, the sealing step S6, and the initial charging and aging step S7 are performed to complete the battery 100.

In the method for producing the battery 100 of the second embodiment, the electrode body 50 is housed in the bottomed rectangular cylindrical case body 21 constituting the second primary wall portion 12 and the four side wall portions 13 to 16 in the housing step S1, so that housing of the electrode body 50 in the case body 21 can be easily performed. Thereafter, by performing the pressing and compressing step S2, the joining step S3, and the releasing step S4, the battery 100 of the self-compression type can be easily produced.

Further in the second embodiment, the first primary wall portion 111 of the case 110 has the elastically deforming portion 111e which is elastically deformed in the case thickness direction CH. The battery 100 can be thus produced in such a manner that the electrode laminated portion 50e of the electrode body 50 is pressed by the further appropriate pressing force. Furthermore, the aluminum-made case 110 having the elastically deforming portions 111e is used, and thus the battery 100 can be produced with the electrode laminated portion 50e pressed with the appropriate pressing force.

Other parts similar to the first embodiment other than the above feature achieve the similar operations and effects with the first embodiment.

### Third Embodiment

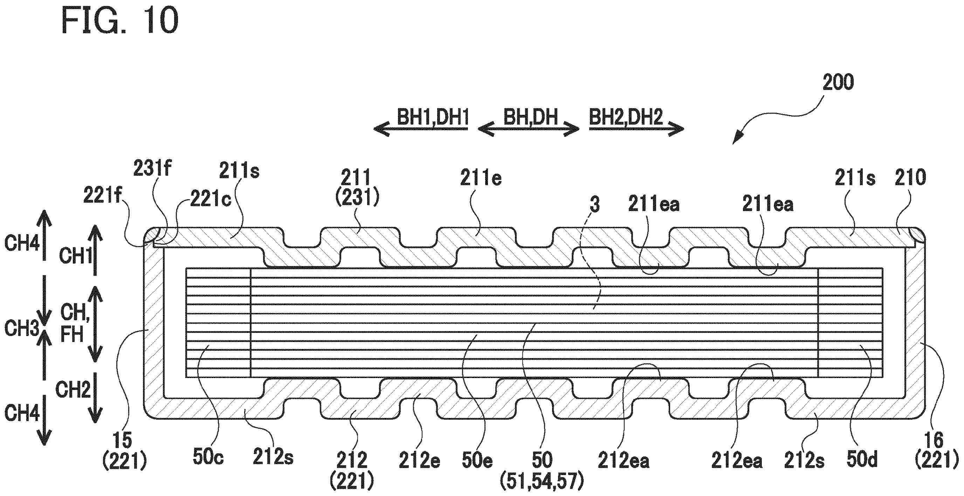

Next, a third embodiment is explained (see FIG. 10). The parts similar to the first embodiment or the second embodiment is omitted or simplified with their explanation. In a battery (a power storage device) 200 of the third embodiment, a first primary wall portion 211 (i.e., a lid 231) of a case 210 is provided with an elastically deforming portion 211e, but a configuration of the elastically deforming portion 211e is different from that of the elastically deforming portion 111e of the second embodiment. Further, the third embodiment is different from the first and second embodiments in a manner that a second primary wall portion 212 of the case 210 is also provided with an elastically deforming portion 212e.

Specifically, the first primary wall portion 211 of the third embodiment has a center portion of a rectangular shape in planar view other than its peripheral portion 211s as the elastically deforming portion 211e to be elastically deformed in the case thickness direction CH. The elastically deforming portion 211e protrudes toward the inner side CH 3 in the case thickness direction CH (namely, toward the electrode laminated portion 50e) more inward than the peripheral portion 211s of the first primary wall portion 211, and a plurality of protruding ridge portions 211ea of U-shape in section extending in the case height direction AH (in FIG. 10, a direction orthogonal to a sheet surface) are formed to be adjoined but spaced from one another in a stripe pattern in the case width direction BH. The elastically deforming portion 211e is elastically deformed in the case thickness direction CH to press the electrode laminated portion 50e of the electrode body 50 in the electrode body thickness direction FH.

The second primary wall portion 212 also has a center portion of a rectangular shape in planar view other than its peripheral portion 212s as an elastically deforming portion 212e to be elastically deformed in the case thickness direction CH. This elastically deforming portion 212e protrudes toward the inner side CH3 in the case thickness direction CH (namely, toward the electrode laminated portion 50e) more inward than the peripheral portion 212s of the second primary wall portion 212, and a plurality of protruding ridge portions 212ea of U-shape in section extending in the case height direction AH are formed to be adjoined but spaced from one another in a stripe pattern in the case width direction BH. The elastically deforming portion 212e is elastically deformed in the case thickness direction CH to press the electrode laminated portion 50e of the electrode body 50 in the electrode body thickness direction FH.

The battery 200 of the third embodiment is also formed by housing the electrode body 50 in the case 210 in such a manner that the electrode laminated portion 50e of the electrode body 50 is compressed in the electrode body thickness direction FH. Specifically, in the case 210, the elastically deforming portion 211e of the first primary wall portion 211 and the elastically deforming portion 212e of the second primary wall portion 212 are mainly elastically deformed to elastically compress the electrode laminated portion 50e of the electrode body 50 in the electrode body thickness direction FH by the first primary wall portion 211 and the second primary wall portion 212 of the case 210.

Accordingly, the battery 200 of the third embodiment is also the self-compression type of elastically compressing the electrode laminated portion 50e of the electrode body 50 by the battery 200 itself. Therefore, in use of the battery 200, any binding members do not need to be separately prepared, or outside binding by a simple binding member is enough. Further, the case 210 is formed by joining the case body 221 constituting the second primary wall portion 212 and the four side wall portions 13 to 16 with the lid 231 constituting the first primary wall portion 211, and therefore, the battery 200 of the self-compression type can be easily produced, and the battery 200 can be inexpensive. Further, the first primary wall portion 211 of the case 210 is provided with the above-mentioned elastically deforming portion 211e, and the second primary wall portion 212 is provided with the above-mentioned elastically deforming portion 212e, so that the battery 200 can be produced in such a manner that the electrode laminated portion 50e of the electrode body 50 is pressed with the further appropriate pressing force.

The battery 200 of the third embodiment is produced as similar to the battery 100 of the second embodiment. Specifically, the electrode body 50 is housed in the case body 221 in the housing step S1, and in the pressing and compressing step S2, the external force Fa is applied to the first primary wall portion 211 and the second primary wall portion 212 by the press device 500 to press and compress the electrode laminated portion 50e of the electrode body 50 in the electrode body thickness direction FH while the elastically deforming portions 211e and 212e are elastically deformed in the case thickness direction CH. Subsequently, in the joining step S3, the lid peripheral edge portion 23 If of the lid 231 is laser welded to the opening peripheral edge portion 221f of the opening 21c of the case body 21 over an entire circumference to form the case 210. Thereafter, the external force Fa is released in the releasing step S4. Further, the injecting step S5, the sealing step S6, and the initial charging and aging step S7 are performed to complete the battery 200.

In the third embodiment, too, the electrode body 50 is housed in the bottomed rectangular cylindrical case body 221 constituting the second primary wall portion 212 and the four side wall portions 13 to 16 in the housing step S1, so that the electrode body 50 can be easily housed in the case body 221. Thereafter, by performing the pressing and compressing step S2, the joining step S3, and the releasing step S4, the battery 200 of the self-compression type can be easily produced. Further, the first primary wall portion 211 of the case 210 has the elastically deforming portion 211e, and the second primary wall portion 212 has the elastically deforming portion 212e, and thus the battery 200 can be produced with the electrode laminated portion 50e of the electrode body 50 pressed by the further appropriate pressing force.

Other parts similar to the first embodiment and the second embodiment other than the above feature have the similar operations and effects with the first embodiment and the second embodiment.

### Fourth Embodiment

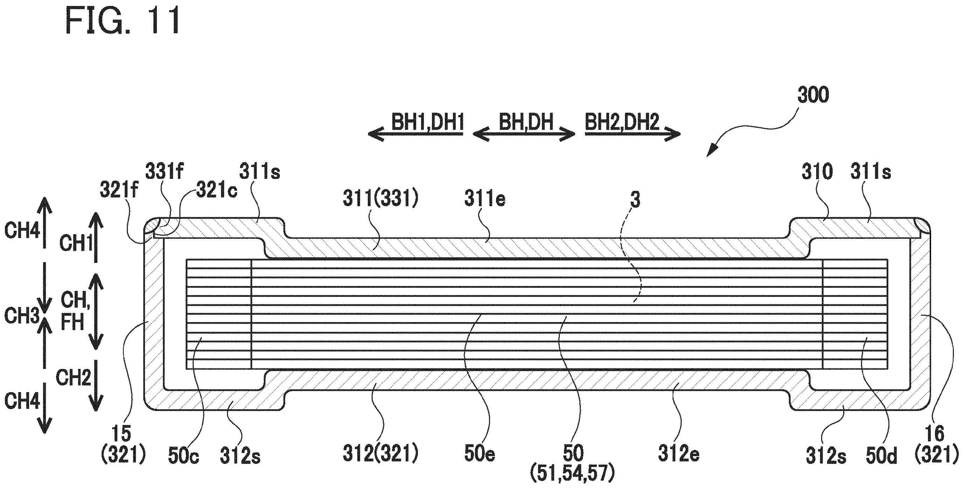

Next, a fourth embodiment is explained (see FIG. 11). Explanations for the same parts with the first to third embodiments are omitted or simplified. In a battery (a power storage device) 300 of the fourth embodiment, a first primary wall portion 311 (i.e., a lid 331) is provided with an elastically deforming portion 311e and a second primary wall portion 312 is provided with an elastically deforming portion 312e in a case 310. Configuration of these elastically deforming portions 311e and 312e is different from those of the elastically deforming portions 111e, 211e, and 212e in the second and third embodiments.

Specifically, the first primary wall portion 311 of the fourth embodiment has a center portion of a rectangular shape in planar view other than its peripheral portion 311s as the elastically deforming portion 311e to be elastically deformed in the case thickness direction CH. This elastically deforming portion 311e is a protruding portion of a rectangular shape in planar view, entirely protruding toward the inner side CH3 (namely, toward the electrode laminated portion 50e) in the case thickness direction CH. The elastically deforming portion 311e is elastically deformed in the case thickness direction CH to press the electrode laminated portion 50e of the electrode body 50 in the electrode body thickness direction FH.

Further, the second primary wall portion 312 has a center portion of a rectangular shape in planar view other than its peripheral portion 312s as the elastically deforming portion 312e to be elastically deformed in the case thickness direction CH. This elastically deforming portion 312e is also a protruding portion of a rectangular shape in planar view, entirely protruding toward the inner side CH3 (namely, toward the electrode laminated portion 50e) in the case thickness direction CH. The elastically deforming portion 312e is elastically deformed in the case thickness direction CH to press the electrode laminated portion 50e of the electrode body 50 in the electrode body thickness direction FH.

The battery 300 of the fourth embodiment is also formed by housing the electrode body 50 in the case 310 in such a manner that the electrode laminated portion 50e of the electrode body 50 is compressed in the electrode body thickness direction FH. Specifically, in the case 310, the elastically deforming portion 311e of the first primary wall portion 311 and the elastically deforming portion 312e of the second primary wall portion 312 are mainly elastically deformed in the case thickness direction CH to elastically compress the electrode laminated portion 50e of the electrode body 50 in the electrode body thickness direction FH by the first primary wall portion 311 and the second primary wall portion 312 of the case 310.

Accordingly, the battery 300 of the fourth embodiment is also the self-compression type of elastically compressing the electrode laminated portion 50e of the electrode body 50 by the battery 300 itself. Therefore, in use of the battery 300, any binding members do not need to be separately prepared, or outside binding by a simple binding member is enough. Further, the case 310 is formed by joining the case body 321 constituting the second primary wall portion 312 and the four side wall portions 13 to 16 with the lid 331 constituting the first primary wall portion 311, and therefore, the battery 300 of the self-compression type can be easily produced, and the battery 300 can be inexpensive.

The battery 300 of the fourth embodiment is produced as similar to the battery 100 of the second embodiment and the battery 200 of the third embodiment. Specifically, the electrode body 50 is housed in the case body 321 in the housing step S1, and in the pressing and compressing step S2, the external force Fa is applied to the first primary wall portion 311 and the second primary wall portion 312 by the press device 500 to press and compress the electrode laminated portion 50e of the electrode body 50 in the electrode body thickness direction FH while the elastically deforming portions 311e and the 312e are elastically deformed in the case thickness direction CH. Subsequently, in the joining step S3, the lid peripheral edge portion 331f of the lid 331 is laser welded to the opening peripheral edge portion 321f of the opening 321c of the case body 321 over an entire circumference to form the case 310. Thereafter, the external force Fa is released in the releasing step S4. Further, the injecting step S5, the sealing step S6, and the initial charging and aging step S7 are performed to complete the battery 300.

In the fourth embodiment, too, the electrode body 50 is housed in the bottomed rectangular cylindrical case body 321 constituting the second primary wall portion 312 and the four side wall portions 13 to 16 in the housing step S1, so that the electrode body 50 can be easily housed in the case body 321. Thereafter, by performing the pressing and compressing step S2, the joining step S3, and the releasing step S4, the battery 300 of the self-compression type can be easily produced.

Other parts similar to the first to third embodiments other than the above feature have the similar operations and effects with the first to third embodiments.

The present disclosure has been explained with the first to fourth embodiments, but the present disclosure is not limited to the first to fourth embodiments and can be applied with any appropriate modifications without departing from the scope of the disclosure.

For example, in the first to fourth embodiments, the flat-wound electrode body 50 is illustrated as an example of the electrode body, but the electrode body is not limited to a flat-wound type. The electrode body may be a laminated electrode body in which a plurality of rectangular positive electrode plates (electrode plates) and a plurality of rectangular negative electrode plates (electrode plate) are laminated via a rectangular separator, respectively.

### Reference Signs List

- 1, 100, 200, 300: Battery (power storage device)
- 10, 110, 210, 310: Case
- 11, 111, 211, 311: First primary wall portion
- 111e, 211e, 311e: Elastically deforming portion
- 12, 212, 312: Second primary wall portion
- 212e, 312e: Elastically deforming portion
- 13: First side wall portion (upper wall portion)
- 14: Second side wall portion (lower wall portion)
- 15: Third side wall portion
- 16: Fourth side wall portion
- 21, 221, 321: Case body
- 21c, 221c, 321c: Opening
- 21f, 221f, 321f: Opening peripheral edge portion
- 31,131,231,331: Lid
- 31f, 131f, 231f, 331f: Lid peripheral edge portion
- 40: Elastic interposing member
- 50: Electrode body
- 50e: Electrode laminated portion
- 51: Positive electrode plate (electrode plate)
- 54: Negative electrode plate (electrode plate)
- CH: Case thickness direction
- FH: Electrode body thickness direction
- Fa: External force
- S1: Housing step
- S2: Pressing and compressing step
- S3: Joining step
- S4: Releasing step
- S5: Injecting step

## Claims

1. A power storage device (1;100;200;300) comprising:
a case (10;110;210,310); and
an electrode body (50) housed in the case (10;110;210;310),
the case (10;110;210;310) of a parallelepiped box-like shape including:
a first primary wall portion (11;111;211;311) of a rectangular shape;
a second primary wall portion (12;212;312) of a rectangular shape opposing to the first primary wall portion (11;111;211;311); and
four side wall portions (13,14,15,16), each of which is of a rectangular shape, connects the first primary wall portion (11;111;211;311) and the second primary wall portion (12;212;312), and extends in a case thickness direction (CH),
the electrode body (50) including electrode plates (51,54) and an electrode laminated portion (50e) of a parallelepiped shape in which the electrode plates (51,54) are laminated in an electrode body thickness direction (FH), and
the electrode body (50) being housed in the case (10;110;210;310) in such a position that the electrode body thickness direction (FH) is in parallel to the case thickness direction (CH), wherein
the case (10;110;210;310) includes:
a case body (21;221;321) of a bottomed rectangular cylindrical shape configuring the second primary wall portion (12;212;312) and the four side wall portions (13,14,15,16) and being formed with an opening (21c;221c;321c) of a rectangular shape configured by the four side wall portions (13,14,15,16); and
a lid (31;131;231;331) of a rectangular shape configuring the first primary wall portion (11;111;211;311) in which a lid peripheral edge portion (31f; 131f;231f;331f) is joined to an entire circumference of an opening peripheral edge portion (21f;221f;321f) of the opening (21c;221c;321c) of the case body (21;221;321), and
the first primary wall portion (11;111;211;311) and the second primary wall portion (12;212;312) of the case (10;110;210;310) elastically compress the electrode laminated portion (50e) of the electrode body (50) in the electrode body thickness direction (FH).

2. The power storage device (1) according to claim 1, wherein an elastic interposing member (40) is provided to be elastically deformed in the case thickness direction (CH) to press the electrode laminated portion (50e) in the electrode body thickness direction (FH) in any one of between the first primary wall portion (11) of the case (10) and the electrode laminated portion (50e) of the electrode body (50) and between the second primary wall portion (12) of the case (10) and the electrode laminated portion (50e) of the electrode body (50).

3. The power storage device (1) according to claim 2, wherein the elastic interposing member (40) is made of any one of aluminum and stainless steel.

4. The power storage device (100;200;300) according to claim 1, wherein at least any one of the first primary wall portion (111;211;311) and the second primary wall portion (12;212;312) of the case (110;210;310) is provided with an elastically deforming portion (111e;211e,212e;311e,312e) which is elastically deformed in the case thickness direction (CH) to press the electrode laminated portion (50e) of the electrode body (50) in the electrode body thickness direction (FH).

5. The power storage device (100;200;300) according to claim 4, wherein the case (110;210;310) comprising the elastically deforming portion (111e;211e,212e;311e,312e) is made of any one of aluminum and stainless steel.

6. The power storage device (1;100;200;300) according to any one of claims 1 to 5, wherein
an electrode terminal (60,70) is connected to the electrode body (50) in the case (10;110;210;310) and penetrates through and extends outside the case (10;110;210;310), and
the electrode terminal (60,70) is fixed to any one of the side wall portions (13,14,15,16) of the case (10;110;210;310).

7. The power storage device (1;100;200;300) according to any one of claims 1 to 6, wherein
an electrolytic solution (3) housed in the case (10;110;210;310) is provided, and
a liquid inlet (13k) communicating inside and outside of the case (10;110;210;310) to inject the electrolytic solution (3) into the case (10;110;210;310) is provided in any one of the side wall portions (13,14,15,16) of the case (10;110;210;310).

8. A method for producing a power storage device (1;100;200;300) comprising:
a case (10; 110;210;310); and
an electrode body (50) housed in the case (10;110;210;310);
the case (10;110;210;310) of a parallelepiped box-like shape including:
a first primary wall portion (11;111;211;311) of a rectangular shape;
a second primary wall portion (12;212;312) of a rectangular shape opposing to the first primary wall portion (11;111;211;311); and
four side wall portions (13,14,15,16), each of which is of a rectangular shape, connects the first primary wall portion (11;111;211;311) and the second primary wall portion (12;212;312), and extends in a case thickness direction (CH),
the electrode body (50) including an electrode plate (51,54) and an electrode laminated portion (50e) of a parallelepiped shape in which the electrode plates is (51,54) laminated in an electrode body thickness direction (FH), and
the electrode body (50) being housed in the case (10;110;210;310) in such a position that the electrode body thickness direction (FH) is in parallel to the case thickness direction (CH), wherein
the case (10;110;210;310) includes:
a case body (21;221;321) of a bottomed rectangular cylindrical shape configuring the second primary wall portion (12;212;312) and the four side wall portions (13,14,15,16) and being formed with an opening (21c;221c;321c) of a rectangular shape configured by the four side wall portions (13,14,15,16); and
a lid (31;131;231;331) of a rectangular shape configuring the first primary wall portion (11;111;211;311) in which a lid peripheral edge portion (31f, 131f;231f;331f) is joined to an entire circumference of an opening peripheral edge portion (21f;221f;321f) of the opening (21c;221c;321c) of the case body (21;221;321), and
the first primary wall portion (11;111;211;311) and the second primary wall portion (12;212;312) of the case (10;110;210;310) elastically compress the electrode laminated portion (50e) of the electrode body (50) in the electrode body thickness direction (FH), wherein
the method includes:
housing (S1) the electrode body (50) in the case body (21;221;321);
pressing and compressing (S2) the electrode laminated portion (50e) of the electrode body (50) in the electrode body thickness direction (FH) by placing the lid (31;131;231;331) on the electrode body (50) housed in the case body (21;221;321) and applying an external force (Fa) to the first primary wall portion (11;111;211;311) configured by the lid (31;131;231;331) and to the second primary wall portion (12;212;312) of the case body (21;221;321);
joining (S3) the lid peripheral edge portion (31f,131f;231f;331f) of the lid (31;131;231;331) to the opening peripheral edge portion (21f;221f;321f) of the opening portion (21c;221c;321c) of the case body (10;110;210;310) over an entire circumference in a state in which the electrode body (50) is pressed and compressed to form the case (10;110;210;310), and
releasing (S4) the external force (Fa) after the joining (S3).

9. The method for producing the power storage device (1) according to claim 8, wherein
the power storage device (1) is provided with an elastic interposing member (40) to be elastically deformed in the case thickness direction (CH) to press the electrode laminated portion (50e) in the electrode body thickness direction (FH) in any one of between the first primary wall portion (11) of the case (10) and the electrode laminated portion (50e) of the electrode body (50) and between the second primary wall portion (12) of the case (10) and the electrode laminated portion (50e) of the electrode body (50),
the housing (S1) is to overlap the elastic interposing member (40) on the electrode laminated portion (50e) of the electrode body (50) and to house the electrode body (50) and the elastic interposing member (40) in the case body (21), and
the pressing and compressing (S2) is to press and compress the electrode laminated portion (50e) of the electrode body (50) and the elastic interposing member (40) in the electrode body thickness direction (FH).

10. The method for producing the power storage device (1) according to claim 9, wherein the elastic interposing member (40) is made of any one of aluminum and stainless steel.

11. The method for producing the power storage device (100;200;300) according to claim 8, wherein
at least any one of the first primary wall portion (111;211;311) and the second primary wall portion (12;212;312) of the case (110;210;310) is provided with an elastically deforming portion (111e;211e,212e;311e,312e) which is elastically deformed in the case thickness direction (CH) to press the electrode laminated portion (50e) of the electrode body (50) in the electrode body thickness direction (FH), and
the pressing and compressing (S2) is to elastically deform the elastically deforming portion (111e;211e,212e;311e,312e) in the case thickness direction (CH) and pressing and compressing the electrode laminated portion (50e) of the electrode body (50) in the electrode body thickness direction (FH).

12. The method for producing the power storage device (100;200;300) according to claim 11, wherein the case (110;210;310) comprising the elastically deforming portion (111e;211e,212e;311e,312e) is made of any one of aluminum and stainless steel.

13. The method for producing the power storage device (1;100;200;300) according to any one of claims 8 to 12, wherein
the power storage device (1;100;200;300) is provided with an electrode terminal (60,70) being connected to the electrode body (50) in the case (10;110;210;310) and penetrating through and extending outside the case (10;110;210;310),
the electrode terminal (60,70) is fixed to any one of the side wall portions (13,14,15,16) of the case (10;110;210;310), and
the housing (S1) is to house the electrode body (50) in the case body (21;221;321) in which the electrode terminal (60,70) has been fixed to the one of the side wall portions (13,14,15,16) in advance to connect the electrode terminal (60,70) and the electrode body (50).

14. The method for producing the power storage device (1;100;200;300) according to any one of claims 8 to 13, wherein
the power storage device (1;100;200;300) is provided with:
an electrolytic solution (3) housed in the case (10;110;210;310),
a liquid inlet (13k) communicating inside and outside of the case (10;110;210;310) to inject the electrolytic solution (3) into the case (10;110;210;310) is provided in any one of the side wall portions (13,14,15,16) of the case (10;110;210;310),
the method includes injecting (S5) the electrolytic solution (3) in the case (10;110;210;310) through the liquid inlet (13k) after the releasing (S4), and
the injecting (S5) is performed in a state in which the side wall portion (13,14,15,16) provided with the liquid inlet (13k) faces upward.
